# EUROPEAN PATENT APPLICATION

(11) **EP 4 722 512 A1**
(43) Date of publication of application: **08.04.2026**
(21) Application number: 25200970.9
(22) Date of filing: 09.09.2025
(51) Int. Cl.: F02C 3/14, F02C 7/228, F02C 9/00, F23R 3/46

(54) **COMBUSTOR ANOMALY MONITORING USING EMISSIONS FEEDBACK**

(30) Priority: 02.10.2024 US 202418904112
(71) Applicant: GE Vernova Technology GmbH, 5400 Baden (CH)
(72) Inventor: WILSON, Bradley Edwin, Greenville, 29615 (US); KHAN, Abdul Rafey, Greenville, 29615 (US)
(74) Representative: Freigutpartners IP Law Firm

(57) **Abstract**

A system for monitoring for a combustor anomaly in a gas turbine system (GT, 100) is provided. The system includes an emissions probe (180) for each combustor element (116) in the GT system and emissions analyzer(s) (190) operatively coupled to the emissions probes to periodically measure an emissions level of the exhaust flow from each emissions probe. A combustor anomaly detection system is connected to the emissions analyzer(s) and determines whether the emissions level at a select emissions probe of the emissions probes deviates from an expected emissions level by more than a predetermined threshold. Where the emissions level so deviates, the system identifies that a combustor element anomaly exists for the combustor element from which the exhaust flow originates and adjusts operation of the combustor element having the combustor element anomaly. The system provides accurate identification of combustor anomalies without the use of a large number of temperature and/or pressure sensors.

## Description

### TECHNICAL FIELD

The disclosure relates generally to gas turbine systems. More specifically, the disclosure relates to a system for monitoring for a combustor anomaly in a gas turbine system using emissions probes.

### BACKGROUND

Gas turbine systems include a compressor section operatively coupled to a turbine section through a combustion section. A compressed airflow from the compressor section is mixed with a fuel in the combustion section to form a combustible mixture. The combustion section includes a plurality of combustor elements (e.g., combustion cans), each including one or more burners. The combustible mixture is directed to the turbine section where it expands along a hot gas path through a number of turbine stages acting upon turbine airfoils mounted on wheels to create work that is output, for example, to power a generator. The hot gases pass from the turbine section through an exhaust section as exhaust gases.

Hydrogen is finding increased use as a fuel in the combustion section because it is a cleaner and more efficient energy source. However, since hydrogen burns hotter than other fuels, early detection of combustion section anomalies, such as flashback or flameholding in burner(s) in a combustor element, is advantageous to limit the severity of damage to hardware. Current approaches use temperature sensors and/or pressure sensors near each burner and/or in the exhaust section to identify anomalies. This arrangement presents manufacturing and costs challenges due to the large number, e.g., potentially hundreds, of sensors that need to be provided. In addition, the time required to maintain the large number of sensors can disadvantageously increase GT system downtime.

### BRIEF DESCRIPTION

The invention as herein claimed relates to the subject matter set forth in the claims. More specific embodiments are set forth below. All aspects, examples and features mentioned below can be combined in any technically possible way.

An aspect of the disclosure provides a system for monitoring for a combustor anomaly in a gas turbine system including an exhaust section downstream of a turbine section and a combustion section including a plurality of combustor elements operatively coupled to the turbine section, the system comprising: an emissions probe for each of the plurality of combustor elements, the emissions probes configured for positioning in a circumferentially spaced manner in the exhaust section, each emissions probe configured to sample an exhaust flow flowing thereto; at least one emissions analyzer operatively coupled to the emissions probes and configured to periodically measure an emissions level of the exhaust flow from each emissions probe; and a combustor anomaly detection system operatively connected to the at least one emissions analyzer, the combustor anomaly detection system configured to perform the following: determine whether the emissions level at a select emissions probe of the emissions probes deviates from an expected emissions level by more than a predetermined threshold; in response to the emissions level of the select emissions probe deviating from the expected emissions level by more than the predetermined threshold, identify that a combustor element anomaly exists for the combustor element from which the exhaust flow measured by the select emissions probe originates; and adjust operation of the combustor element having the combustor element anomaly.

Another aspect of the disclosure includes any of the preceding aspects, and the at least one emissions analyzer includes a single emissions analyzer, and further comprising a valve system configured to couple each emissions probe periodically, operatively to the single emissions analyzer under control of the combustor anomaly detection system.

Another aspect of the disclosure includes any of the preceding aspects, and the at least one emissions analyzer includes an emissions analyzer for each of the emissions probes.

Another aspect of the disclosure includes any of the preceding aspects, and the identifying the combustor element anomaly includes determining from which combustor element the exhaust flow measured by the select emissions probe originates based on a swirl chart mapping a path of the exhaust flow from each of the plurality of combustor elements through to the exhaust section.

Another aspect of the disclosure includes any of the preceding aspects, and the combustor anomaly detection system triggers an alarm in response to the identifying the combustor element anomaly.

Another aspect of the disclosure includes any of the preceding aspects, and the combustor anomaly detection system changes a fuel flow to at least one of: at least one combustor element in the combustion section and at least part of the combustor element having the combustor element anomaly in response to the identifying the combustor element anomaly.

Another aspect of the disclosure includes any of the preceding aspects, and the combustor anomaly detection system shuts down the combustion section in response to the identifying the combustor element anomaly.

Another aspect of the disclosure includes any of the preceding aspects, and the combustor anomaly detection system determines the expected emissions level from a baseline emissions pattern based on a load of a gas turbine of the gas turbine system.

Another aspect of the disclosure includes any of the preceding aspects, and the combustor anomaly detection system determines the expected emissions level based on a pro rata portion of a global emissions level of all of the plurality of combustor elements in the exhaust section attributable to a single combustor element of the plurality of combustor elements.

Another aspect of the disclosure includes any of the preceding aspects, and each combustor element includes a plurality of burners and the combustor anomaly detection system further performs the following: in sequence, turning off each burner of the plurality of burners of the combustor element having the combustor element anomaly and measuring a drop in the emissions level at the select emissions probe; identifying that burner of the plurality of burners of the combustor element having the combustor element anomaly having a largest drop in the emissions level during the turning off and determining that a combustor burner anomaly exists for the burner with the largest drop in the emissions level; and adjusting operation of the burner having the combustor burner anomaly.

An aspect of the disclosure includes a gas turbine system, comprising: a compressor section; a combustion section operatively coupled to the compressor section and including a plurality of combustor elements; a turbine section operatively coupled to the combustion section; an exhaust section downstream of the turbine section; a monitoring system for monitoring for a combustor anomaly, the monitoring system including: an emissions probe for each of the plurality of combustor elements, the emissions probes positioned in a circumferentially spaced manner in the exhaust section, each emissions probe configured to sample an exhaust flow flowing thereto; at least one emissions analyzer operatively coupled to the emissions probes and configured to periodically measure an emissions level of the exhaust flow from each emissions probe; and a combustor anomaly detection system operatively connected to the at least one emissions analyzer, the combustor anomaly detection system configured to perform the following: determine whether the emissions level at a select emissions probe of the emissions probes deviates from an expected emissions level by more than a predetermined threshold; in response to the emissions level of the select emissions probe deviating from the expected emissions level by more than the predetermined threshold, identify an combustor element anomaly exists for the combustor element from which the exhaust flow measured by the select emissions probe originates; and adjust operation of the combustor element having the combustor element anomaly.

Another aspect of the disclosure includes any of the preceding aspects, and the at least one emissions analyzer includes a single emissions analyzer, and further comprising a valve system configured to couple each emissions probe periodically, operatively to the single emissions analyzer under control of the combustor anomaly detection system.

Another aspect of the disclosure includes any of the preceding aspects, and the at least one emissions analyzer includes an emissions analyzer for each of the emissions probes.

Another aspect of the disclosure includes any of the preceding aspects, and the identifying the combustor element anomaly includes determining from which combustor element the exhaust flow measured by the select exhaust sensor originates based on a swirl chart mapping a path of the exhaust flow from each of the plurality of combustor elements through to the exhaust section.

Another aspect of the disclosure includes any of the preceding aspects, and the combustor anomaly detection system triggers an alarm in response to the identifying the combustor element anomaly.

Another aspect of the disclosure includes any of the preceding aspects, and the combustor anomaly detection system changes a fuel flow to at least one of: at least one combustor element in the combustion section and at least part of the combustor element having the combustor element anomaly in response to the identifying the combustor element anomaly.

Another aspect of the disclosure includes any of the preceding aspects, and the combustor anomaly detection system shuts down the combustion section in response to the identifying the combustor element anomaly.

Another aspect of the disclosure includes any of the preceding aspects, and the combustor anomaly detection system determines the expected emissions level from a baseline emissions pattern based on a load of a gas turbine of the gas turbine system.

Another aspect of the disclosure includes any of the preceding aspects, and the combustor anomaly detection system determines the expected emissions level based on a pro rata portion of a global emissions level of all of the plurality of combustor elements in the exhaust section attributable to a single combustor element of the plurality of combustor elements.

An aspect of the disclosure includes a method for monitoring for a combustor anomaly in a gas turbine system including an exhaust section downstream of a turbine section and a combustion section including a plurality of combustor elements operatively coupled to the turbine section, the method comprising: measuring an emissions level of an exhaust flow from each of a plurality of emissions probes positioned in a circumferentially spaced manner in the exhaust section using at least one emissions analyzer operatively coupled to the plurality of emissions probes, wherein the plurality emissions probes include an emissions probe for each of the plurality of combustor elements; and determining whether the emissions level at a select emissions probe of the plurality of emissions probes deviates from an expected emissions level by more than a predetermined threshold; in response to the emissions level of the select emissions probe deviating from the expected emissions level by more than the predetermined threshold, identifying a combustor element anomaly exists for the combustor element from which the exhaust flow measured by the select emissions probe originates; and adjusting operation of the combustor element having the combustor element anomaly.

Two or more aspects described in this disclosure, including those described in this summary section, may be combined to form implementations not specifically described herein. That is, all embodiments described herein can be combined with each other.

The details of one or more implementations are set forth in the accompanying drawings and the description below. Other features, objects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic block diagram of a gas turbine (GT) system including a monitoring system with a combustor anomaly detection system according to embodiments of the disclosure;
FIG. 2 shows a cross-sectional side view of an illustrative combustor element in the form of a combustor can type of combustor element for a combustion section useable in the GT system of FIG. 1;
FIG. 3 shows an end view of an illustrative combustor can of FIG. 2;
FIG. 4 shows a schematic axial view of an exhaust section of the GT system using a can-annular combustor arrangement according to embodiments of the disclosure;
FIG. 5 shows a schematic axial view of an exhaust section of the GT system using a can-annular combustor arrangement according to other embodiments of the disclosure;
FIG. 6 shows a schematic axial view of an exhaust section of the GT system using an annular combustor arrangement according to embodiments of the disclosure; and
FIG. 7 shows a flow diagram illustrating a method of detecting combustor anomalies according to embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the subject matter of the current technology, it will become necessary to select certain terminology when referring to and describing relevant machine components within the illustrative application of a gas turbine (GT) system. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as the working fluid through the GT system or, for example, the flow of air through the combustor or coolant through one of the GT system's component systems. The term "downstream" corresponds to the direction of flow of the fluid, and the term "upstream" refers to the direction opposite to the flow. The terms "forward" and "aft," without any further specificity, refer to directions, with "forward" referring to the front or compressor section end of the turbomachine, and "aft" referring to the rearward or turbine end of the gas turbine system.

It is often required to describe parts that are at different radial positions with regard to a center axis. The term "axial" refers to movement or position parallel to an axis, e.g., an axis of a turbomachine. The term "radial" refers to movement or position perpendicular to an axis, e.g., an axis of a turbomachine. In cases such as this, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. Finally, the term "circumferential" refers to movement or position around an axis, e.g., a circumferential interior surface of a casing extending about an axis of a turbomachine. As indicated above, it will be appreciated that such terms may be applied in relation to the axis of the turbomachine.

**In** addition, several descriptive terms may be used regularly herein, as described below. The terms "first," "second," and "third," may be used interchangeably to distinguish one component from another and are not intended to signify location or importance of the individual components.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event may or may not occur or that the subsequently described feature may or may not be present and that the description includes instances where the event occurs, or the feature is present and instances where the event does not occur or the feature is not present.

Where an element or layer is referred to as being "on," "engaged to," "connected to," "coupled to," or "mounted to" another element or layer, it may be directly on, engaged, connected, coupled, or mounted to the other element or layer, or intervening elements or layers may be present. **In** contrast, when an element is referred to as being "directly on," "directly engaged to," "directly connected to," or "directly coupled to" another element or layer, there are no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items. The verb forms of "couple" and "mount" may be used interchangeably herein.

Embodiments of the disclosure include a system for monitoring for a combustor anomaly in a GT system, a GT system including the monitoring system, and a related method. The GT system includes an exhaust section downstream of a turbine section and a combustion section including a plurality of combustor elements operatively coupled to the turbine section. The monitoring system includes an emissions probe for each of the plurality of combustor elements where the emissions probes are configured for positioning in a circumferentially spaced manner in the exhaust section. Each emissions probe is configured to sample an exhaust flow flowing thereto, e.g., from a particular combustor element in the combustion section. The monitoring system also includes at least one emissions analyzer operatively coupled to the emissions probes and configured to periodically measure an emissions level of the exhaust flow from each emissions probe. A combustor anomaly detection system is operatively connected to the at least one emissions analyzer and is configured to determine whether the emissions level at a select emissions probe of the emissions probes deviates from an expected emissions level by more than a predetermined threshold. Where the emissions level deviates from the expected emissions level by more than the predetermined threshold, the combustor anomaly detection system identifies that a combustor element anomaly exists for the combustor element from which the exhaust flow measured by the select emissions probe originates and adjusts operation of the combustor element having the combustor element anomaly. The monitoring system provides accurate identification of combustor anomalies without the use of a large number of sensors and the required expense and downtime they require for maintenance.

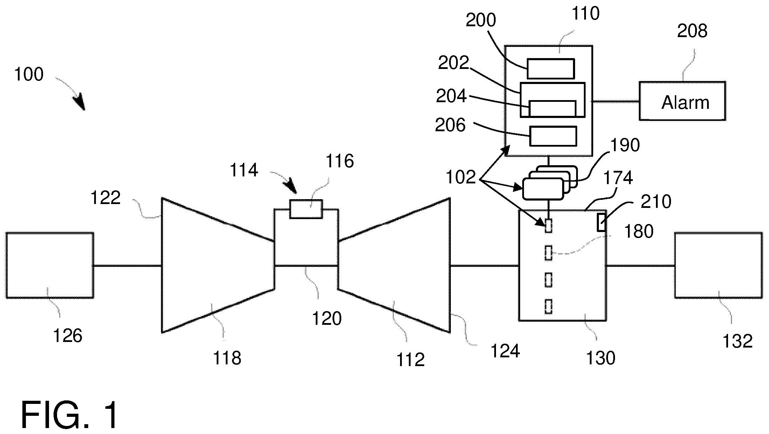

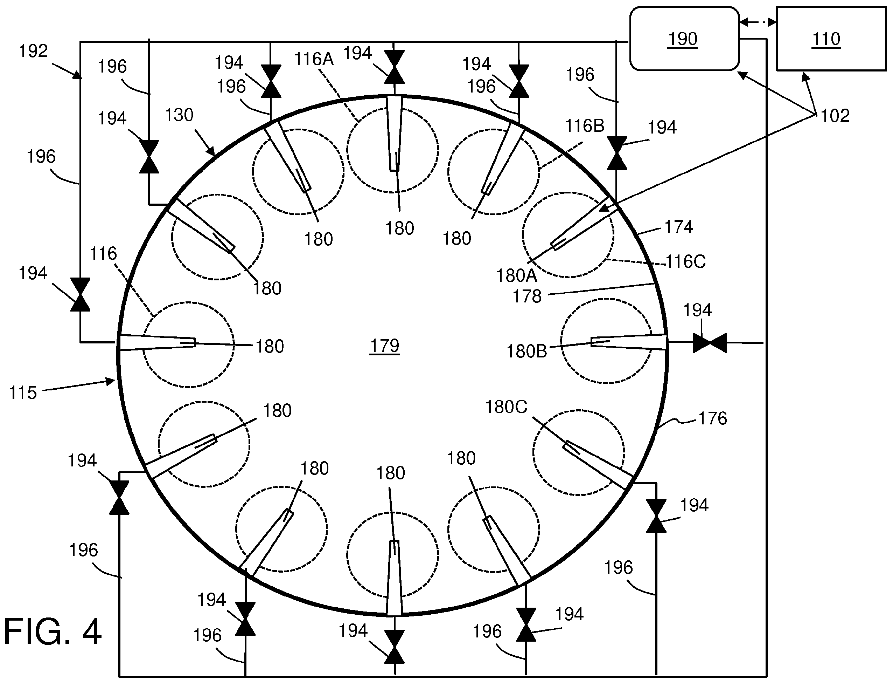

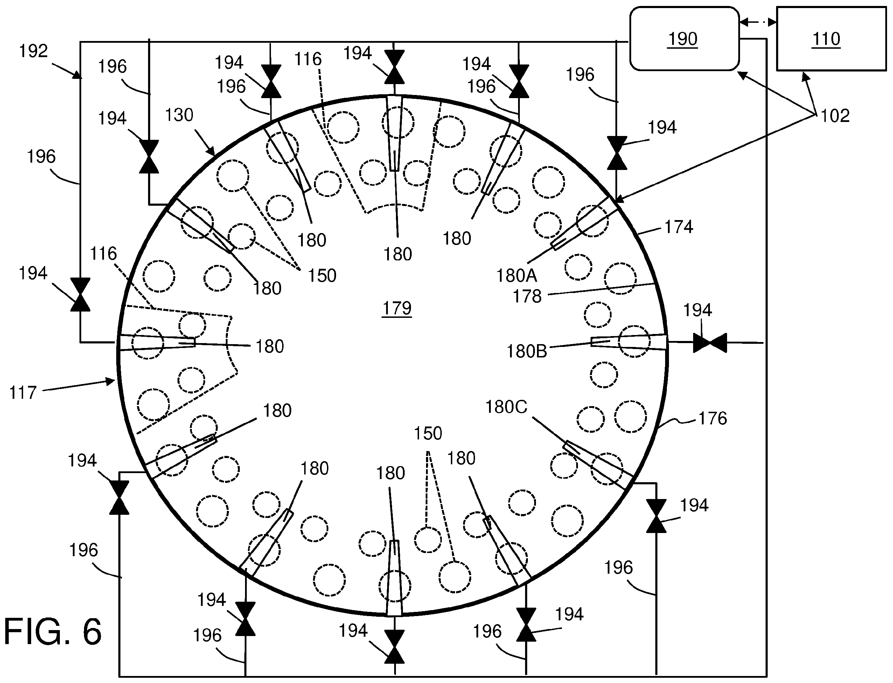

FIG. 1 shows a schematic block diagram of a gas turbine (GT) system 100 including a monitoring system 102. As will be described herein, monitoring system 102 includes, among other things, a combustor anomaly detection system 110 according to embodiments of the disclosure. GT system 100 includes a compressor section 118, a combustion section 114 operatively coupled to compressor section 118 and including a plurality of combustor elements 116 (one shown for clarity), and a turbine section 112 (e.g., an expansion turbine) operatively coupled to combustion section 114. Compressor section 118 is fluidly connected to turbine section 112 through combustion section 114. Combustion section 114 includes a plurality of combustor elements 116 which may be arranged in a can-annular combustor arrangement 115 (see e.g., FIGS. 4-5) or in an annular combustor arrangement 117 (see e.g., FIG. 6). Compressor section 118 may also be mechanically linked to turbine section 112 through a shaft 120.

Compressor section 118 includes an air inlet 122 and turbine section 112 includes an exhaust outlet 124. An air intake system 126 may be fluidically connected to air inlet 122. Air intake system 126 may condition air passing into compressor section 118. For example, air intake system 126 may remove or reduce moisture that may be carried by air passing into air inlet 122. An exhaust section 130 is fluidically connected to exhaust outlet 124 downstream of turbine section 112. Exhaust section 130 may, among other things, condition exhaust gases passing from turbine section 112 prior to introduction to ambient. GT system 100 may also include a driven load 132 that could take the form of, for example, a generator, a pump, or a vehicle.

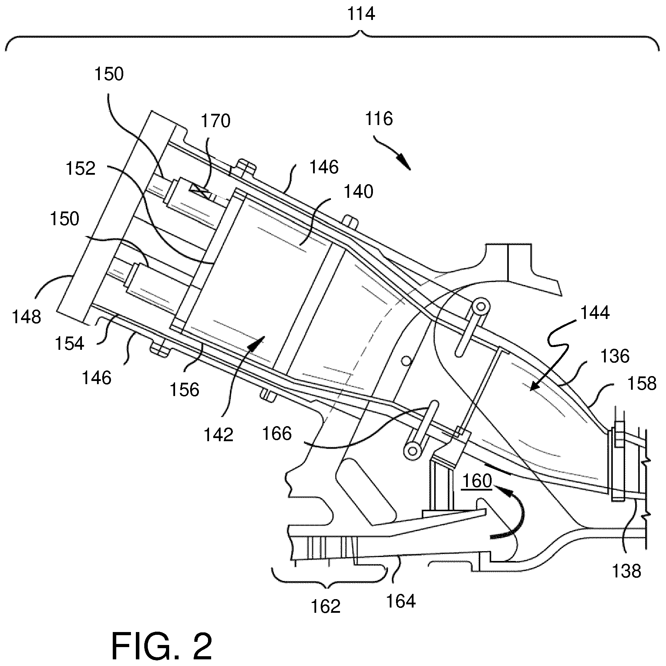

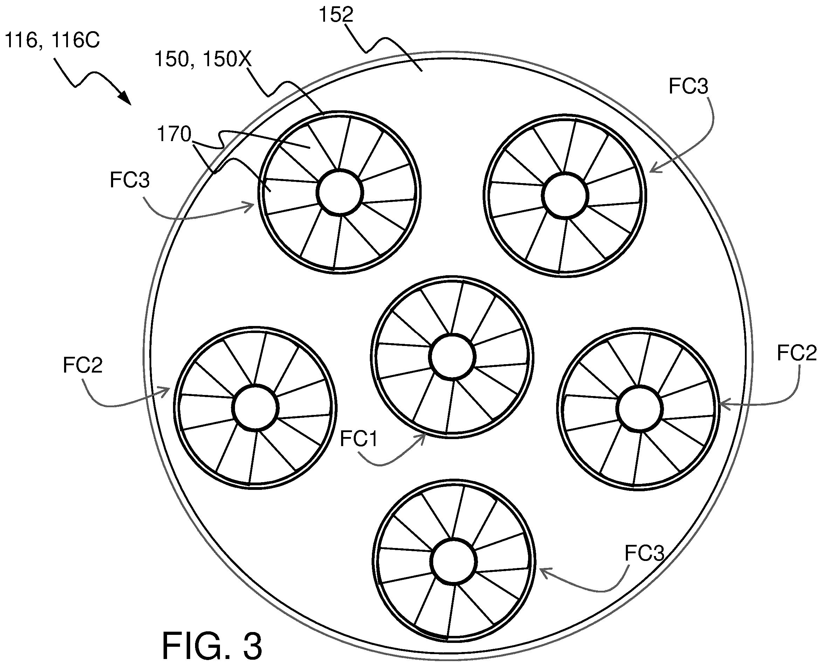

As used herein, "combustor elements" 116 can include one or more burners 150 and take a variety of forms. (Burners 150 may also be referenced as fuel nozzles.) FIG. 2 shows a cross-sectional side view of an illustrative combustor element 116 in the form of a combustor can for a combustion section 114 useable in GT system 100 of FIG. 1, and FIG. 3 shows an end view of an illustrative combustor can form of a combustor element 116 of FIG. 2. In this form, referring to FIGS. 2-3, combustion section 114 may include a circular array of a plurality of circumferentially spaced combustor elements 116 in the form of combustor cans. A fuel/air mixture is burned in any number of burners 150 in each combustor can to produce the hot energetic combustion gas flow, which flows through a transition piece 136 to turbine nozzles 138 of turbine section 112 (FIG. 1). For purposes of the present description, only one combustor can is illustrated, it being appreciated that all of the other combustor cans arranged about combustion section 114 are substantially identical to the illustrated combustor can in FIG. 2. The arrangement of a plurality of circumferentially spaced combustor cans has come to be known in the art as a can-annular combustor arrangement (or system).

Referring now to FIG. 2, an illustrative combustor element 116 for GT system 100 (FIG. 1) is shown. Combustor element 116 in the form of a combustor can may include primary combustion stage 142 and an optional secondary combustion stage 144. As noted, transition piece 136 flows hot combustion gas flow to turbine nozzles 138 and the turbine blades (not shown). Primary combustion stage 142 may include a casing 146, an end cover 148, a plurality of burners 150, a cap assembly 152, a flow sleeve 154, and a combustion liner 156 within flow sleeve 154. An ignition device(s) (not shown) is/are provided and may include an electrically energized spark plug. Combustion in primary combustion section 142 occurs within combustion liner 156. Combustion air is directed through apertures (not shown) in flow sleeve 154 and convectively cools combustion liner 156 before being directed through burners 150 and, optionally, a plurality of openings formed in cap assembly 152. The air enters combustion liner 156 under a pressure differential and mixes with fuel from plurality of burners 150 within combustion liner 156. Consequently, a combustion reaction occurs within combustion liner 156 releasing heat for the purpose of driving turbine section 112 (FIG. 1). High-pressure air for primary combustion stage 142 may enter flow sleeve 154 and a transition piece impingement sleeve 158, from an annular plenum 160 (e.g., a compressor discharge plenum). Compressor section 118 (FIG. 1), which is represented by a series of vanes and blades at 162 and a diffuser 164 in FIG. 2, supplies high-pressure air for this purpose and other applications relative to burners 150.

As shown in FIG. 2, optional secondary combustion stage 144 may include another plurality of burners 166 (e.g., axial fuel injectors) for transversely injecting a secondary fuel mixture into a combustion gas flow product of primary combustion stage 142. Burners 166 may include any variety and number of injection elements for injecting the second fuel mixture. Burners 166 may extend radially into the combustion gas flow path, as shown, or may be flush with the inner surface of combustion liner 156. It is also recognized that secondary combustion stage 144 may be omitted.

As noted, combustor element 116 may include a plurality of burners 150, such as the swirling fuel nozzles shown in FIG. 3. For combustor cans, each burner 150 may include any now known or later developed premixer configuration capable of mixing a fuel and air and directing it downstream into combustion chamber 140. In one non-limiting example, burner(s) 150 may be operatively coupled to end cover 148. Burners 150 may include any now known or later developed structure for mixing an oxidizer (e.g., air) and a fuel (e.g., liquid, or gaseous fuel) before introduction into burner interior. For example, burners 150 may include a plurality of swirl vanes 170 that impart rotation to the entering air and a plurality of fuel ports (not labeled) on the swirl vanes 170 that distribute fuel in the rotating air stream. The fuel and air then mix in an annular passage, referred to as a burner tube, within burners 150 before reacting within primary combustion zone 142 of combustion chamber 140.

Although burners 150 are illustrated as swirler-type fuel nozzles, it should be appreciated that other types of fuel nozzles may be used instead or in addition to the swirler-type fuel nozzles. For example, one or more of burners 150 may be a bundled tube fuel nozzle (also called a "micromixer") in which each burner 150 includes a plurality of parallel tubes within which fuel and air are premixed upstream of primary combustion zone 142. As burners 150 of various types may be used and as many variations are well known in the art, no further details are provided so the reader may focus on the salient points of the disclosure.

Any number of burners 150 may be used in each combustor can form of combustor element 116. FIG. 2 shows a non-limiting example in which perhaps six (6) burners 150 are used, and FIG. 3 shows an axial end view of burners 150 in combustor element 116 in which a five-around-one burner configuration is used. More or fewer burners 150 may be used in each combustor can.

Referring to FIG. 6, combustor elements 116 may alternatively be provided as part of an annular combustor arrangement 117. In this setting, combustor elements 116 may include groupings or sectors of burners 150 - see pie shaped sections in FIG. 6. Each burner 150 can take any form typically used for annular combustor arrangements. In this setting, one or more circular rows of burners 150 are disposed in annular fashion and are used to combust fuel similarly to that described relative to FIG. 2. In this setting, each combustor element 116 may include one or more burners 150 from one or more circular rows. As the structure of burners 150 for this type arrangement and variations thereof are well known in the art, no further details are provided so the reader may focus on the salient points of the disclosure.

As noted, burners 150 may experience situations that can cause damage thereto, especially when used with a high energy, high heat fuel, like hydrogen. A non-comprehensive list of possible damaging situations include flashback where the combustion reaction feeds upstream into burner(s) 150, e.g., after ignition, rather than remaining in combustion chamber 140, and flameholding where the combustion reaction occurs in burner(s) 150, e.g., at ignition, but is not forced out or drawn into combustion chamber 140.

FIG. 4 shows a schematic axial view of exhaust section 130 of GT system 100 (FIG. 1) using a can-annular combustor arrangement 115, according to embodiments of the disclosure. As shown in FIG. 4, exhaust section 130 includes a housing 174 having an outer surface 176 and an inner surface 178 that defines an exhaust gas flow path 179. Housing 174 is in fluid communication with exhaust outlet 124 (FIG. 1) of turbine section 112 (FIG. 1) such that the exhaust flows through housing 174. Other structure of exhaust section 130, e.g., exhaust filters and/or other handling systems, have been omitted as they are not relevant to operation of monitoring system 102. Combustor cans (labeled as combustor elements 116) of combustion section 114 are illustrated superimposed on FIG. 2 for description purposes, but are not part of exhaust section 130, i.e., they are upstream of turbine section 112. For purposes of description, twelve (12) combustor cans (elements 116) are illustrated; however, more or fewer combustor cans may be used in combustion section 114 (FIG. 1).

Monitoring system 102 includes an emissions probe 180 for each of the plurality of combustor elements 116. As shown in FIG. 4, emissions probes 180 are configured for positioning in a circumferentially spaced manner in exhaust section 130 and are configured to sample an exhaust flow flowing thereto, i.e., from turbine section 112 (FIG. 1) through exhaust gas flow path 179. Emission probes 180 may include any now known or later developed structure capable of sampling the exhaust flow, e.g., open tubes facing upstream into the exhaust flow.

Monitoring system 102 also includes at least one emissions analyzer 190 operatively coupled to emissions probes 180 and configured to periodically measure an emissions level of the exhaust flow from each emissions probe 180. As shown in FIG. 4, in certain embodiments, a single emissions analyzer 190 can be used. In this case, monitoring system 102 also includes a valve system 192 configured to couple periodically and operatively each emissions probe 180 to single emissions analyzer 190 under control of detection system 110. As shown in FIG. 4, valve system 192 may include a valve 194 for controlling flow of an exhaust flow sample from each emissions probe 180 to single emissions analyzer 190 through a respective conduit 196 (not all labeled for clarity). Conduits 196 can include any manner of tube or pipe capable of delivering a sample of the exhaust flow to single emissions analyzer 190. In some cases, portion(s) of conduits 196 may be shared between emissions probes 180. Single emissions analyzer 190 may include any now known or later developed mechanism to draw the sample exhaust flows thereto and/or clear a particular conduit 196 of an exhaust flow sample, e.g., a vacuum, fan, or other gas flow creating element.

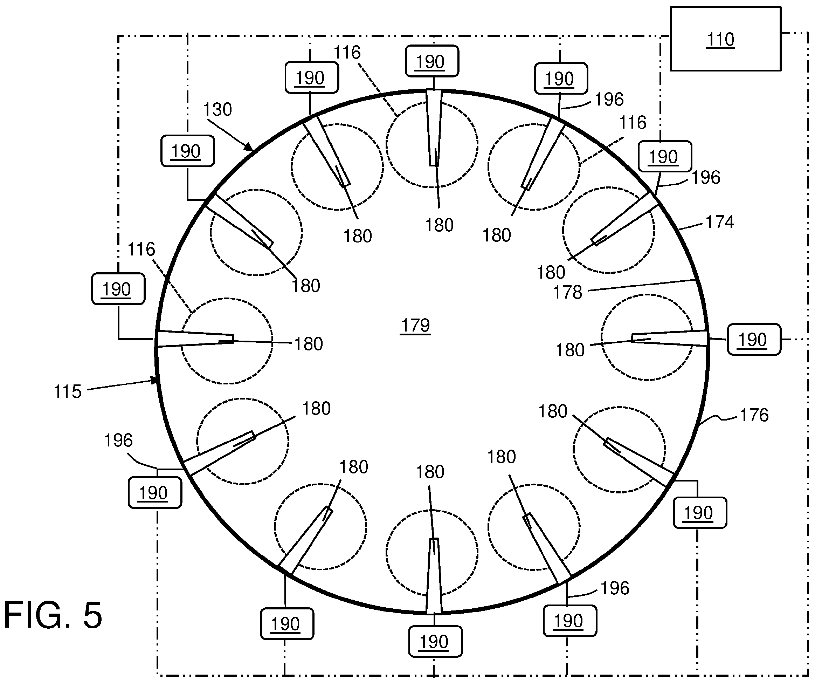

FIG. 5 shows a schematic axial view of exhaust section 130 of GT system 100 according to other embodiments of the disclosure. As shown in FIG. 5, in certain embodiments, an emissions analyzer 190 may be provided for each of emissions probes 180. In this case, monitoring system 102 includes conduits 196 (only some labeled) from emissions probe 180 to a respective emissions analyzer 190. Conduits 196 can include any manner of tube or pipe capable of delivering a sample of the exhaust flow to a respective emissions analyzer 190. Each emissions analyzer 190 may include any now known or later developed mechanism to draw the sample exhaust flow thereto and/or clear a respective conduit 196 of an exhaust flow sample, e.g., a vacuum, fan, or other gas flow creating element.

FIG. 6 shows a schematic axial view of exhaust section 130 of GT system 100 (FIG. 1) using an annular combustor arrangement 117, according to embodiments of the disclosure. Here, exhaust section 130 may be structured as previously described relative to FIG. 4, e.g., with housing 174 having outer surface 176 and inner surface 178 that defines an exhaust gas flow path 179. Combustor elements 116 in the form of groups or sectors of burners 150 of combustion section 114 are illustrated superimposed on FIG. 6 for description purposes, but are not part of exhaust section 130, i.e., they are upstream of turbine section 112. For purposes of description, twenty-four burners 150 are shown in each circular row, with combustor elements 116 including four burners 150 each (two adjacent burners from each row). It is emphasized, however, other arrangements of an annular combustor arrangement 117 are possible with, for example, more or fewer circular rows of burners 150, more or fewer combustor elements 116, combustor elements 116 with different numbers of burners than four in each, etc. While FIG. 6 has been illustrated with valve system 192 of FIG. 4, it will be recognized that the arrangement of emissions analyzers 190 in FIG. 5 may be equally applicable to annular combustor arrangement117 in FIG. 6.

In each embodiment, emissions analyzer(s) 190 is/are communicatively coupled, e.g., via wired or wireless communications, to detection system 110. Detection system 110 may control when emission analyzer(s) 190 perform an analysis of exhaust from any of emissions probes 180. The period of each emissions analyzer 190 determining an emissions level from a respective emissions probe 180 can be user defined, e.g., daily, weekly, monthly, etc. Emissions analyzer(s) 190 may determine the level of any desired form of emissions such as but not limited to nitrous oxide (NOₓ or NO) in a manner that it can be compared to, for example, prior, stored emissions levels (stored in memory 206 (FIG. 1)) or to a predetermined threshold, as will be described further herein.

In FIGS. 4-6, emissions probes 180 are arranged in a circumferentially spaced manner that is illustrated as matching that of the schematic representation of combustor elements 116. The illustrations, however, have been arranged in this manner for clarity, and it is emphasized that this matching circumferentially aligned arrangement is not necessary in all cases as the two different sets of structure can be offset circumferentially. The circumferential arrangement of combustor elements 116 and emissions probes 180 is, however, arranged such that the exhaust flow from each combustor element 116 can be measured by a respective emissions probe 180. More particularly, the path of an exhaust flow from a particular combustor element 116 through turbine section 112 and partially through housing 174 of exhaust section 130 may be identified using any now known or later developed process, such as empirical data and/or flow modeling. Typically, the flow path data is arranged in what is referenced as a 'swirl chart,' since swirl is imparted to the combustion gases as they are expanded through the rotating blades of turbine section 112. In this manner, as will be described further and as shown in FIG. 4, the exhaust level from each particular combustor element 116 can be measured and analyzed by a particular emissions probe 180 to identify combustor anomalies for that combustor element 116.

For example, as shown in FIG. 4, emissions probe 180A may measure the emissions level for combustor element 116A, emissions probe 180B may measure the emissions level for combustor element 116B, emissions probe 180C may measure the emissions level for combustor element 116C, and so on. In the example shown, each emissions probe 180 is offset by approximately 60° clockwise from a combustion can 116 from which the exhaust it measures originates. This situation indicates an anticipated approximately 60° of swirl of an exhaust flow from a combustor element 116 through turbine section 112 and/or exhaust section 130 to a respective emissions probe 180 for a particular GT system 100 at a particular load. It will be recognized that the amount of swirl can vary drastically within different GT systems 100 and under, for example, different loads and/or environmental conditions. Accordingly, each GT system 100 arrangement may have its own particular set of swirl charts that dictates an emissions probe 180 to combustor element 116 correspondence based on, among other factors, different loads and environmental conditions. Similar arrangements can be used for the FIGS. 5 and 6 embodiments.

Monitoring system 102 of GT system 100 also includes combustor anomaly detection system 110 (FIG. 1) (hereafter "detection system 110" for brevity) operatively connected to emissions analyzer(s) 190 among other structure that controls aspects of combustion section 114. In FIG. 1, detection system 110 is shown as a standalone entity relative to GT system 100. It should be understood that detection system 110 may be co-located with other controls for GT system 100 or may be in a central global monitoring and detection system. Thus, detection system 110 may receive data from and simultaneously monitor combustion in multiple GT systems 100 located anywhere in the world from a single monitoring location. In contrast to prior art systems in which combustor anomalies are detected by reviewing exhaust gas temperature and/or pressure trends over time, detection system 110 identifies the presence of combustor anomalies, such as instantaneous hot and/or cold spots, by evaluating the exhaust flow from respective combustor elements 116 in exhaust section 130. As shown in FIG. 1, detection system 110 includes a central processing unit (CPU) 200, a computer readable storage medium 202 provided with a set of program instructions 204, and a memory 206. As will be discussed more fully below, detection system 110 may optionally be operatively connected to an alarm 208 that may provide a visual and/or an audible alarm upon detecting a combustor element (and/or burner) anomaly.

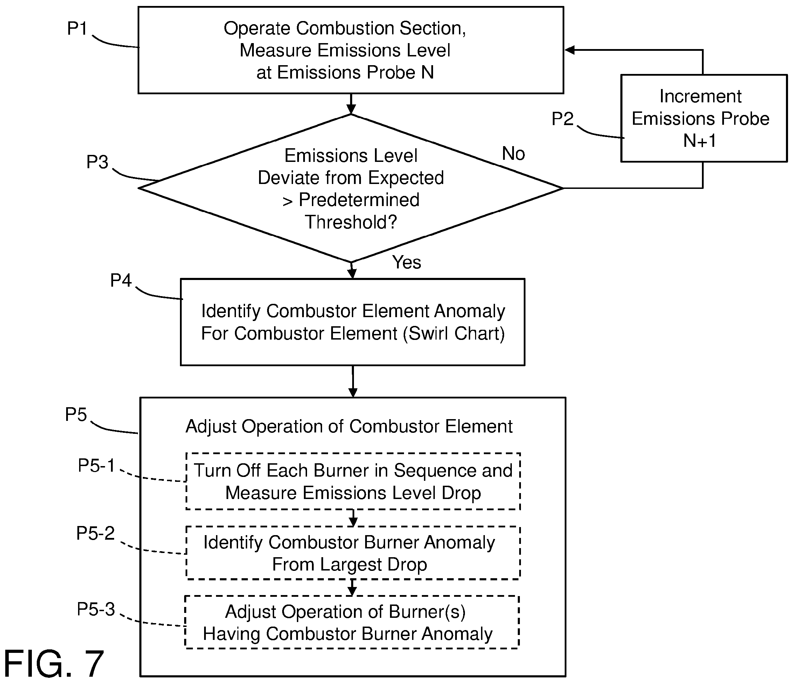

FIG. 7 shows a flow diagram illustrating a method for monitoring for a combustor anomaly in GT system 100 including exhaust section 130 downstream of turbine section 112 and a combustion section 114 including plurality of combustor elements 116 operatively coupled to turbine section 112. More particularly, FIG. 7 shows a method of detecting various combustor anomalies according to embodiments of the disclosure. The method for detecting combustor anomalies may be implemented by program instructions 204 (FIG. 1) of detection system 110.

Referring to FIGS. 1-7, the method will now be described. In a precursor process P1, combustion section 114 is operated (with GT system 100), and respective emissions probes 180 (i.e., emissions probe number N) and emissions analyzer(s) 190 measure respective emissions levels in exhaust section 130. As noted, each emissions probe 180 measures the emissions level from a respective combustor element 116 as identified by the known exhaust flow path from combustor element 116 through to exhaust section 130, e.g., using the previously-described swirl charts.

Process P2 indicates the repeated, periodic measuring of an emissions level using emissions probes 180 and emissions analyzer(s) 190. That is, processes P1-P2 describe measuring an emissions level of an exhaust flow from each of a plurality of emissions probes 180 positioned in a circumferentially spaced manner in exhaust section 130 using emissions analyzer(s) 190 operatively coupled to emissions probes 180. As noted, the plurality of emissions probes 180 includes an emissions probe for each of the plurality of combustor elements 116. As noted, the duration over which emissions probes 180 are used or accessed may be user defined, e.g., daily, weekly, monthly, etc. Process P2 indicates detection system 110, using emissions analyzer(s) 190, sequentially measuring an emissions level from each emissions probe 180, i.e., N+1, until each emissions probe 180 has been measured, e.g., all twelve probes 180 in FIG. 4.

In process P3, for each emissions level measurement, detection system 110 determines whether the emissions level at a select emissions probe 180 of the plurality of emissions probes 180 deviates from an expected emissions level by more than a predetermined threshold. The term "select" is used to indicate a particular emissions probe 180 of the plurality of emissions probes 180 that happens to have the emissions level deviation as indicated. The "expected emissions level" is an emissions level that is anticipated or normal for a combustor element 116 in GT system 100. In certain embodiments, the expected emissions level for a combustor element 116 may be user defined based on factors such as but not limited to: number, size and type of combustor elements 116; number, size and type of burners 150 in each combustor element 116; fuel type (e.g., hydrogen, natural gas, oil and/or combination thereof); fuel flow rate and/or pressure; fuel splits within combustor elements 116; presence or omission of secondary combustion zone 144 (FIG. 2); GT system 100 type and size; environmental conditions at the location of GT system 100; GT system 100 load and/or global emissions level; and/or other operational characteristics of GT system 100 and its combustion section 114. For example, the expected emissions level can be a value or a range of values that one would expect a particular combustor element 116 with, for example, a particular number and a certain type and size of burner 150 to produce using a particular fuel.

In other embodiments, detection system 110 may determine the expected emissions level from a baseline emissions pattern based on a load of turbine section 112 of GT system 100. In this case, detection system 110 may reference empirical data or models (e.g., based on algorithms, neural networks, artificial intelligence) that indicate expected emissions levels for each combustor element 116 based on a load on turbine section 112, e.g., 5000 ppm NOx for each combustor element 116 with a 50% load on turbine section 112. The "global emissions level" is the emissions level of all exhaust in exhaust section 130 from all combustor elements 116 and may be measured by another emissions probe 210 (FIG. 1) at any appropriate location of exhaust section 130, e.g., an exit of exhaust section 130 to ambient. Emissions probe 210 may be coupled to any emissions analyzer 190 or another dedicated emissions analyzer (not shown) capable of measuring an emissions level therefrom.

The "predetermined threshold" may be any user-selected emissions level value configured to identify a combustor anomaly in a combustor element 116. The predetermined emissions level may vary and may be based on, for example, any of the factors used to create the expected emissions level. In one example, the predetermined threshold may be a set value increase in emissions level, e.g., a particular parts per million (ppm) value of NOx, indicative of combustion issues at a combustor element 116. In another example, the predetermined threshold may be a percentage increase in emissions level. In process P3, if the emissions level of the select emissions probe 180 does not deviate from the expected emissions level by more than the predetermined threshold, i.e., 'No' at process P3, then processing continues with process P2 to periodically measure emissions levels at emission sensors 180.

While emissions analysis is shown in the flow diagram as occurring sequentially after an emissions level measurement at each individual emissions probes 180, the emissions analysis of process P3 may alternatively be performed after the emissions level from all emissions probes 180 have been obtained, i.e., by measuring emissions levels at all emissions probes before any analysis and omitting process P2.

In process P4, in response to the emissions level of select emissions probe 180 deviating from the expected emissions level by more than the predetermined threshold, detection system 110 identifies, i.e., indicates, that a 'combustor element anomaly' exists for the combustor element 116 from which the exhaust flow measured by the select emissions probe 180 originates. For example, as shown in FIG. 4, if an emissions level from emissions probe 180B, determined by emissions analyzer(s) 190, deviates more than the predetermined threshold from the expected emissions level for combustor element 116B, detection system 110 identifies a combustor element anomaly originating in combustor element 116B. The deviation may be an increase or a decrease in an emissions level. The indicating may also include determining from which combustor element 116 the exhaust flow measured by the select emissions probe 180 originates based on, for example, a swirl chart mapping a path of the exhaust flow from each of the plurality of combustor elements 116 through to exhaust section 130.

In process P5, detection system 110 adjusts operation of the combustor element 116 having the detected combustor element anomaly. The adjustment can take a variety of forms. For example, detection system 116 may change a fuel flow to at least one of: combustor element(s) 116 in combustion section 114 (i.e., combustor element overall) and at least part of combustor element 116, e.g., fuel flow to one or more of its burners 150, having the combustor element anomaly in response to identifying the combustor element anomaly. In certain combustion sections 114, a number of fuel circuits deliver fuel to different burners 150 in each combustor element 116. For example, as shown in FIG. 3, where a combustor element 116 has the form of a combustor can and includes six (6) burners 150, they can be arranged in groups for fuel delivery, e.g., with one central burner fed by one fuel circuit (FC1), two outer burners fed by another fuel circuit (FC2), and the remaining three burners fed by another fuel circuit (FC3). In this case, detection system 110 may independently control the percentage of fuel to these fuel circuits (i.e., to change the fuel split) within combustor element 116C to address an issue, such as flashback burning. In another example, detection system 110 may change the fuel flow to one or more combustor elements 116 in combustion section 114 in response to the identifying the combustor element anomaly to address the issue.

In another (more likely) example, detection system 110 may shut down combustion section 114 in response to the identifying the combustor element anomaly. That is, detection system 110 could turn off all combustor elements 116, and any related structure of GT system 100, e.g., turbine section 112. Once shutdown, inspections of combustor element 116C for damage could be conducted. Such inspections would be expedited by detection system 110 having identified the particular combustor element 116 with anomalous behavior. In an optional embodiment, detection system 110 may also trigger alarm 208 in response to identifying the combustor element anomaly. Other adjustments are also possible.

When combustor element 116 is adjusted based on the above-described process, the particular burner(s) 150 within the troubled combustor element 116 causing the anomaly may not be known, and the adjustment may be made to all burner(s) 150 or perhaps certain burners 150 known to be in a particular location, such as a central burner rather than a radial outer burner. Process P5-1 through P5-3 are optional processes according to embodiments of the disclosure. In this embodiment, once a particular combustor element 116 has been identified as having a combustor element anomaly, detection system 110 can also identify a 'combustor burner anomaly' amongst the plurality of burners 150 within the particular combustor element 116 having the combustor element anomaly. That is, detection system 110 can also identify the particular burner 150 amongst the plurality of burners 150 for the troubled combustor element 116 that may be causing the combustor element anomaly. Here, the troubled combustor element 116 can be adjusted by adjusting a particular one or more burners 150 of the troubled combustor element 116 known to be causing an issue, rather than blindly adjusting all the burners collectively or certain burners. For purposes of description, combustor element 116C will be referenced as having the combustor element anomaly, and a burner 150X (FIG. 3) will be referenced as having a combustor burner anomaly.

In process P5-1, and as shown in FIG. 3, detection system 110 may, in sequence, turn off each burner 150 (6 in FIGS. 2 and 3) of the plurality of burners 150 of combustor element 116C having the combustor element anomaly and measure a drop in the emissions level at the select emissions probe 180A (FIG. 4) for the combustor element 116C (FIG. 4). The emissions level drop occurs after sufficient time for the exhaust flow from combustor element 116C to reach and/or settle into a consistent pattern at the select emissions probe 180A. Hence, process P5-1 results in a respective emissions level drop measurement for each burner 150 when it is turned off.

In process P5-2, detection system 110 identifies a combustor burner anomaly exists for a burner 150X (FIG. 3) of the plurality of burners 150 of combustor element 116C having the combustor element anomaly by identifying the burner (i.e., burner 150X) having the largest drop in the emissions level during the turning off. That is, for a combustor element 116C having a combustor element anomaly, a particular burner 150X causing the combustor anomaly will typically generate a larger emissions level and can be identified as that burner creating the largest emissions drop during sequencing through turning off each burner 150 of the combustor element 116C.

In process P5-3, detection system 110 adjusts operation of burner 150X having the combustor burner anomaly. The adjustment can take a variety of forms. For example, detection system 110 may reduce a fuel flow to burner 150X of combustor element 116C in response to the identifying the combustor burner anomaly. In another example, detection system 110 may shut down burner 150X having the combustor burner anomaly. In either case, the rest of burners 150 may operate as desired. While one burner 150X has been identified as having a combustor burner anomaly, once that burner 150X is turned off, the process P5-1 to P5-3 may be repeated for other burners 150 in combustor element 116C having the combustor element anomaly.

The processes P5-1 to P5-3 may be repeated for a certain number of times, e.g., 2-3. The number of times the processes are repeated may be based on the number of burners 150 in a combustor element 116 in the particular GT system 100, and with the understanding that once too many burners 150 are adjusted, it may be prudent to perform a more comprehensive shut down and maintenance for combustor 116C. In an optional embodiment, detection system 110 may also trigger alarm 208 in response to the identifying a combustor burner anomaly. While the combustion burner anomaly has been described relative to a single burner 150X, it will be recognized that it may actually include a number of burners, e.g., sharing a fuel supply circuit (e.g., FC3) and the cyclical shutdown process may be applied to fuel circuits rather than individual burners 150.

Embodiments of the disclosure provide various technical and commercial advantages, examples of which are discussed herein. The monitoring system described herein provides accurate identification of combustor anomalies in a combustor element and/or within a burner of the combustor element without the use of a large number of sensors and the required expense and downtime they require for maintenance.

The term "operatively coupled to" may, as per the skilled person's understanding, be construed such that such that the respective components are fluidly connected to each other and configured to exchange fluid with each other.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" or "about," as applied to a particular value of a range, applies to both end values and, unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope of the disclosure. The embodiments were chosen and described in order to best explain the principles of the disclosure and the practical application of the technology and to enable others of ordinary skill in the art to understand the disclosure for contemplating various modifications to the present embodiments, which may be suited to the particular use contemplated.

## Claims

1. A method for monitoring for a combustor anomaly in a gas turbine system (100) including an exhaust section (130) downstream of a turbine section (112) and a combustion section (114) including a plurality of combustor elements (116) operatively coupled to the turbine section, the method comprising:
measuring an emissions level of an exhaust flow from each of a plurality of emissions probes (180) positioned in a circumferentially spaced manner in the exhaust section (130) using at least one emissions analyzer (190) operatively coupled to the plurality of emissions probes (180), wherein the plurality emissions probes include at least one emission probe provided for each of the plurality of combustor elements; and
determining whether the emissions level at a select emissions probe of the plurality of emissions probes deviates from an expected emissions level by more than a predetermined threshold;
in response to the emissions level of the select emissions probe deviating from the expected emissions level by more than the predetermined threshold, determining from which combustor element (116) the exhaust flow measured by the select emissions probe (180) originates and identifying a combustor element anomaly exists for the combustor element from which the exhaust flow measured by the select emissions probe originates; and
adjusting operation of the combustor element (116) having the combustor element anomaly.

2. The method of claim 1, comprising determining from which combustor element (116) the exhaust flow measured by the select emissions probe (180) originates based on a swirl chart mapping a path of the exhaust flow from each of the plurality of combustor elements through to the exhaust section (130).

3. The method of any preceding claim, comprising triggering an alarm in response to the identifying the combustor element anomaly

4. The method of any preceding claim, comprising changing a fuel flow to at least one of:
- at least one combustor element (116) in the combustion section or
- at least part of the combustor element having the combustor element anomaly in response to identifying the combustor element anomaly.

5. The method of any preceding claim, comprising shutting down the combustion section (114) in response to the identifying the combustor element anomaly.

6. The method of any preceding claim, comprising determining the expected emissions level from a baseline emissions pattern based on at least one of
- a load of a turbine section (112) of the gas turbine system (100); and
- a pro rata portion of a global emissions level of all of the plurality of combustor elements (116) in the exhaust section (130) attributable to a single combustor element of the plurality of combustor elements.

7. The method of any preceding claim, comprising
in sequence, turning off each burner (150) of a plurality of burners of the combustor element (116) having the combustor element anomaly and measuring a drop in the emissions level at the select emissions probe (180);
identifying that burner of the plurality of burners of the combustor element having the combustor element anomaly having a largest drop in the emissions level during the turning off and determining that a combustor burner anomaly exists for the burner with the largest drop in the emissions level; and
adjusting operation of the burner (150) having the combustor burner anomaly.

8. The method of any preceding claim, comprising operating a valve system (192) to couple each emissions probe (180) out of the plurality of emissions probes periodically, operatively to a single emissions analyzer (190).

9. A system configured for detecting combustor anomalies in a gas turbine system (100), the gas turbine system including an exhaust section (130) downstream of a turbine section (112) and a combustion section (114) including a plurality of combustor elements (116) operatively coupled to the turbine section, the system comprising:
a plurality of emissions probes (180), wherein at least one emissions probe is provided for each combustor element (116) of the plurality of combustor elements, the emissions probes configured for positioning in a circumferentially spaced manner in the exhaust section (130), each emissions probe configured to sample an exhaust flow flowing thereto;
at least one emissions analyzer (190) operatively coupled to the emissions probes (180) and configured to periodically measure an emissions level of the exhaust flow from each emissions probe; and
a combustor anomaly detection system (110) operatively connected to the at least one emissions analyzer (190), the combustor anomaly detection system configured to perform the following:
determine whether the emissions level at a select emissions probe (180) of the emissions probes deviates from an expected emissions level by more than a predetermined threshold;
in response to the emissions level of the select emissions probe deviating from the expected emissions level by more than the predetermined threshold, determining from which combustor element (116) the exhaust flow measured by the select emissions probe originates and identify that a combustor element anomaly exists for the combustor element from which the exhaust flow measured by the select emissions probe originates; and
generate an output signal configured to adjust operation of a combustor element.

10. The system of the preceding claim, wherein the output signal configured to adjust operation of a combustor element is configured to adjust operation of the combustor element having the combustor element anomaly.

11. The system of any of claims 9 or 10, wherein the at least one emissions analyzer (190) includes a single emissions analyzer, and further comprises a valve system (192) configured to couple each emissions probe (180) periodically, operatively to the single emissions analyzer under control of the combustor anomaly detection system (110).

12. The system of any of claims 9 or 10, wherein the at least one emissions analyzer (190) includes an emissions analyzer for each of the emissions probes (180).

13. The system of any of claims 9 through 12, wherein the combustor anomaly detection system (110) is configured to perform a method as described in any of claims 1 through 7.

14. A gas turbine system (100), comprising:
a compressor section (118);
a combustion section (114) operatively coupled to the compressor section and including a plurality of combustor elements (116);
a turbine section (112) operatively coupled to the combustion section;
an exhaust section (130) downstream of the turbine section;
a system for monitoring for a combustor anomaly according to any of claims 9 through 13, wherein the emission probes (180) of the plurality of emissions probes are positioned in a circumferentially spaced manner in the exhaust section (180) , each emissions probe configured to sample an exhaust flow flowing thereto.

15. The gas turbine system (100) of the preceding claim, wherein the combustor anomaly detection system (110) is configured to generate an output signal configured to adjust operation of the each combustor element (116) out of the plurality of combustor elements upon detection of a combustor element anomaly of the respective combustor element.
